# EUROPÄISCHE PATENTSCHRIFT

(11) **EP 2 508 694 B1**
(45) Veröffentlichungstag und Bekanntmachung des Hinweises auf die Patenterteilung: **23.10.2013**
(21) Anmeldenummer: 12002456.7
(22) Anmeldetag: 04.04.2012
(51) Int. Cl.: E04H 6/02, F24J 2/00, B60L 11/18, H01L 31/042

(54) **Carport**
Carport
Abri de garage

(30) Priorität: 04.04.2011 DE 102011015878
(43) Veröffentlichungstag der Anmeldung: 10.10.2012
(73) Patentinhaber: ARETANA Solar GmbH, 66265 Heusweiler (DE)
(72) Erfinder: Görg, Thomas, 66117 Saarbrücken (DE); Schmitt, Peter, 66265 Heusweiler (DE); Osterhagen, Marc, 55270 Jugenheim (DE)
(74) Vertreter: Meyer, Thorsten

(56) Entgegenhaltungen:
- WO-A1-2010/136468
- WO-A2-2010/060720
- DE-U1-202009 006 182
- US-A1- 2010 201 309

## Beschreibung

Die Erfindung betrifft einen Carport zur Aufstellung auf einer Fläche im Freien für wenigstens ein Kraftfahrzeug mit elektrischem Antrieb.

Carports sind immer mehr gefragt. Dabei sollen diese möglichst einfach, schnell und kostengünstig aufzustellen sein und den Witterungsbedingungen entsprechend angepasst sein.

Zudem kommt immer mehr Bedürfnis an insbesondere schräg angestellter Fläche auf, die der Installation von Solarmodulen dient, um der gesteigerten Nachfrage nach regenerativen Energien nachzukommen.

Beim Stand der Technik sind Carports bekannt, die aufwändig durch Erdarbeiten fundamentiert werden müssen, um einer gegebenenfalls auftretenden Windlast Stand halten zu können.

Aus der DE 20 2009 006 182 U1 ist ein solcher Carport bekannt, der zudem noch Photovoltaikmodule auf seinem Dach aufweist um Solarstrom zu generieren.

Oftmals werden die zu ladenden elektrisch angetriebenen Fahrzeuge nicht zu den Sonnenstunden und insbesondere Nachts untergestellt. Dann sind die Solarpaneele nutzlos

Aus der WO 2010/060720 A2 und der US 2010/201309 A1 sind elektrische Kontaktsysteme für Fahrzeuge zum Koppeln und Laden deren Batterien mit einer Ladevorrichtung bekannt geworden.

Aus der WO 2010/136468 A1 ist ein Carport bekannt, dessen Dachfläche Solarpaneele trägt und in dessen linear ausgestalteten und parallel zur Seitenlinie angeordneten Tragstrukturen eine Batterie zum zwischenspeichern der elektrischen Energie aufweisen.

Aufgabe der Erfindung ist es einen verbesserte Carport zur Aufstellung auf einer Fläche im Freien für wenigstens ein Kraftfahrzeug zur Verfügung zu stellen, bei dem ein sicherer Stand der Struktur auf der Oberfläche gewährleistet ist und eine Energieabgabe an ein zu ladendes elektrisch angetriebenes Fahrzeug erfolgen kann.

Diese Aufgabe wird durch einen Carport zur Aufstellung auf einer Fläche im Freien für wenigstens ein Kraftfahrzeug nach den Merkmalen des Anspruchs 1 gelöst.

Erfindungsgemäß ist ein Carport zur Aufstellung auf einer geschlossenen Fläche im Freien für wenigstens ein Kraftfahrzeug, welcher eine Dachfläche aufweist welche unter einem Winkel gegen die Waagerechte angestellt ist, wobei die Dachfläche durch Seitenträger an zwei gegenüberliegenden Stirnseiten gestützt ist, welche jeweils auf einer Seiten-Sockelstruktur fußen, welche auf der geschlossenen Fläche abgestellt werden können, wobei auf der Dachfläche Solarpaneele angeordnet sind, durch die die aufgenommene Solarenergie in Strom umgewandet wird, wobei in wenigstens einer der Seiten-Sockelstrukturen ein elektrischer Energiespeicher vorgesehen ist, der den erzeugten Strom zur Abgabe an ein zu ladendes Fahrzeug zwischenspeichern und kumulieren kann vorgeschlagen, der sich dadurch auszeichnet, dass der erzeugte Strom durch eine Anschlussmöglichkeit oder induktiv an ein unter der Dachfläche abgestelltes Fahrzeug abgegeben werden kann, und, dass die Seiten-Sockelstruktur L-förmig ausgestaltet ist, wobei die Seitenträger auf oder in einem Trag-Schenkel der L-Form ruhen, der parallel zu der Seite der Dachfläche verläuft an denen die Seitenträger die Dachfläche unterstützen, und dass der zweite freie Schenkel der Seiten-Sockelstruktur unterhalb der Dachfläche angeordnet ist, wobei der elektrische Energiespeicher im zweiten freien Schenkel angeordnet ist.

Hierdurch ist eine Zwischenspeicherung des gewonnenen Solarstroms ermöglicht und eine gezielte Abgabe des zwischenspeicherten Stroms an ein zu ladendes Fahrzeug gegeben. Somit kann der Carport mit seinen Solarpaneelen die Sonnenstunden nutzen in denen kein Fahrzeug untergestellt ist.

Hierdurch ist zudem auf besonders effektive Weise konstruktiv sichergestellt, dass, ohne störende Masseverteilungen oder Abstützungen im Bereich der zu öffnenden Türen eines unter dem Carport abgestellten Fahrzeugs, ein sicherer Stand des Carports auch ohne Verankerung in der Abstellfläche desselben notwendig ist.

Bevorzugterweise sind die Seitenträger durch unter einem Winkel gegen die Senkrechte angewinkelte Streben oder Stützen ausgebildet. Dies ist nicht nur statisch von Vorteil bei einer möglichst kleinen Ausdehnung des Trag-Schenkels der L-Form, sondern auch ästhetisch ansprechend.

Von Vorteil ist der zweite freie Schenkel der Seiten-Sockelstruktur unterhalb der Dachfläche angeordnet ist, was eine kompakte Bauform ermöglicht.

Bevorzugterweise ist vorgesehen, dass zwischen den beiden Seiten-Sockelstrukturen eine Mittel-Sockelstruktur angeordnet ist, deren Schwerpunkt auf der gemeinsamen Schwerpunktslinie der Seiten-Sockelstrukturen liegt.

Die Mittel-Sockelstruktur hat nach einer bevorzugten Weiterbildung der Erfindung eine T-Form, wobei ein Mittelträger auf oder in einem dem mittleren Schenkel der T-Form ruht, und wobei die zwei gegenüberliegenden freien Schenkel der T-Form in Richtung und auf der Linie der beiden freien Schenkel der Seiten-Sockelstrukturen angeordnet sind.

Von Vorteil weisen die Sockelstrukturen eine Masseverteilung auf, die dementsprechend dezentral ausgebildet ist wie diese außerhalb der Schwerpunktslinie der Dachfläche angeordnet seid.

Nach einer besonders Vorteilhaften und daher bevorzugten Weiterbildung der Erfindung ist vorgesehen, dass auf der Dachfläche Solarpaneele angeordnet sind, deren aufgenommene Solarenergie in Strom umgewandet wird und über eine in den Seitenträgern angeordnete Leitung zu den Sockelstrukturen geführt ist, wo der Strom durch eine Anschlussmöglichkeit oder induktiv an ein unter der Dachfläche abgestelltes Fahrzeug abgegeben werden kann.

Eine Weiterbildung sieht vor, dass der Abstand zwischen dem Schwerpunkt der Dachfläche zum Schwerpunkt der Sockelstrukturen ca. 1,35 m bis 1,60 m beträgt.

Eine weitere vorteilhafte Weiterbildung der Erfindung sieht vor, dass das Verhältnis des Abstands des Schwerpunkts der Dachfläche zur der Schwerpunktslinie der Sockelstrukturen am nächsten gelegenen Hinterkante der Dachfläche zum Abstand des Schwerpunkts der Sockelstrukturen zur Hinter-Seite der Dachfläche ca. 1,73. bis 1,93 beträgt.

Ebenso von Vorteil beträgt das Verhältnis des Gewichts der gesamten Dachkonstruktion mit gegebenenfalls darauf montierten Solarpaneelen zum Gewicht der Sockelstrukturen 0,4 bis 0,7.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig. 1: eine schematische Darstellung eines erfindungsgemäßen Carports für 2 Fahrzeuge von schräg oben,
- Fig. 2: eine schematische Darstellung des Carports aus Fig. 1 in einer Rückansicht von schräg oben,
- Fig. 3: eine schematische Darstellung eines erfindungsgemäßen Carports für 2x2 Fahrzeuge mit Mittelstütze,
- Fig. 4: eine schematische Darstellung des Carports aus Fig. 3 in einer Rückansicht von schräg oben,
- Fig. 5: eine schematische Seitenansichts-Darstellung des erfinderischen Carports,
- Fig. 6: eine schematische Draufsicht auf eine Seiten-Sockelstruktur in L-Form,
- Fig. 7: eine schematische Draufsicht auf eine Mittel-Sockelstruktur in T-Form,
- Fig. 8: eine schematische Draufsicht auf die Dachtragkonstruktion des Carports aus Fig. 1.,
- Fig. 9: eine schematische Draufsicht auf die Seiten-Sockelstruktur mit dargestelltem Energiespeicher,
- Fig. 10: eine schematische Seitenansichts-Darstellung der Seiten-Sockelstruktur aus Fig. 9,
- Fig. 11: eine schematische Schnittdarstellung in Blickrichtung XI aus Fig. 9, und
- Fig. 12: eine schematische Schnittdarstellung in Blickrichtung XII aus Fig. 9.

Die in den Figuren gleichen Bezugsziffern bezeichnen gleiche oder gleich wirkende Elemente.

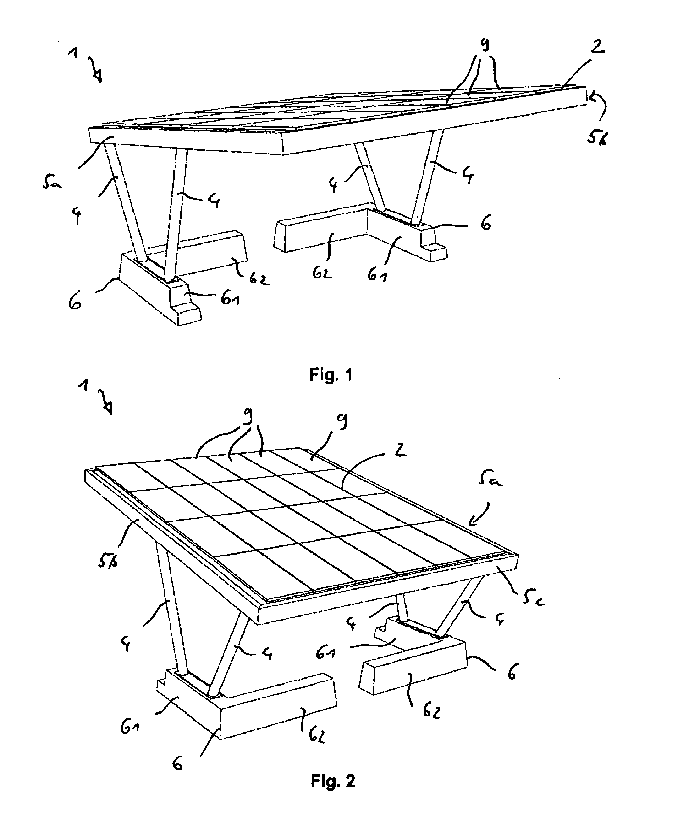

Die Fig. 1 und 2 zeigen einen beispielhaften erfindungsgemäßen Carport (1) zur Aufstellung auf einer Fläche im Freien für zwei nebeneinander abzustellende Kraftfahrzeuge von schräg oben und in einer Rückansicht von schräg oben.

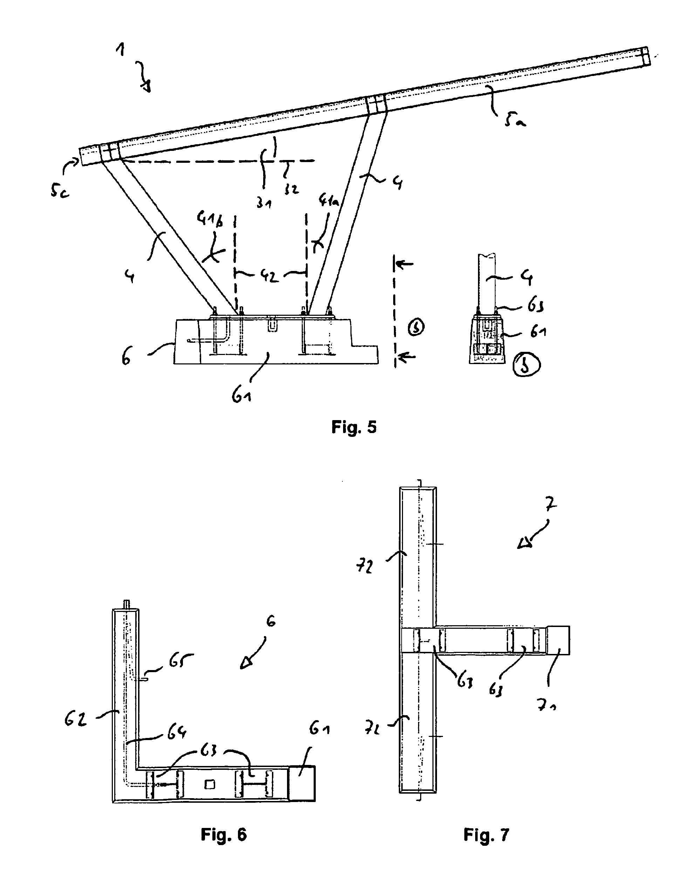

Der gezeigte Carport weist eine Dachfläche 2 auf welche unter einem Winkel 31 gegen die Waagerechte 32 angestellt ist (siehe hierzu Fig. 5). Dabei ist die Dachfläche 2 durch Seitenträger 4 an zwei gegenüberliegenden Stirnseiten 5a, 5b gestützt, welche jeweils auf einer Seiten-Sockelstruktur 6 fuβen, welche auf einem Untergrund abgestellt werden können. Eine aufwändige Fundamentierung ist nicht notwendig.

Der Carport 1 schützt dabei nicht nur vor Regen, Hagel und Schneelasten, sondern vermag die notwendigerweise benötigte Dachfläche auch noch durch auf der Dachfläche 2 angeordnete Solarpaneele 9 regenerative Energie zu Verfügung zu stellen.

Dazu wird die durch die Solarpaneele 9 aufgenommene Solarenergie in Strom umgewandet und über eine in den Seitenträgern angeordnete Leitung 64 zu den Sockelstrukturen 6 und/oder 7 geführt, wo der Strom durch eine Anschlussmöglichkeit 65 oder induktiv an ein unter der Dachfläche abgestelltes Fahrzeug abgegeben werden kann.

In den Seiten-Sockelstrukturen 6 sind elektrische Energiespeicher 10 vorgesehen, die den erzeugten Strom zur Abgabe an ein zu ladendes Fahrzeug zwischenspeichern und kumulieren können.

Die Seiten-Sockelstrukturen 6 sind mit ihrem Schwerpunkt außerhalb des Schwerpunkts der Dachfläche bzw. einer Linie durch den Schwerpunkt und senkrecht zu den zwei gegenüberliegenden Stirnseiten angeordnet, wobei die Seiten-Sockelstruktur 6 L-förmig ausgestaltet ist.

Die Seitenträger 4 ruhen die im Beispiel jeweils auf einem Trag-Schenkel 61 der L-Form, die parallel zu der Seite der Dachfläche 5a oder 5b verlaufen, an denen die Seitenträger 4 die Dachfläche 2 unterstützen.

Der jeweils zweite freie Schenkel 62 der Seiten-Sockelstruktur 6 verläuft parallel zu der Hinter-Seite 5c der Dachfläche 2 die der gemeinsamen Schwerpunktslinie durch den Schwerpunkt der Seiten-Sockelstrukturen 6 und senkrecht zu den zwei gegenüberliegenden Stirnseiten 5a, 5b am nächsten ist. Der zweite freie Schenkel 62 der Seiten-Sockelstruktur 6 ist unterhalb der Dachfläche 2 angeordnet.

Die Seitenträger 4 sind durch unter einem Winkel 41a, 41b gegen die Senkrechte 42 angewinkelte Streben oder Stützen ausgebildet (siehe auch hierzu Fig. 5).

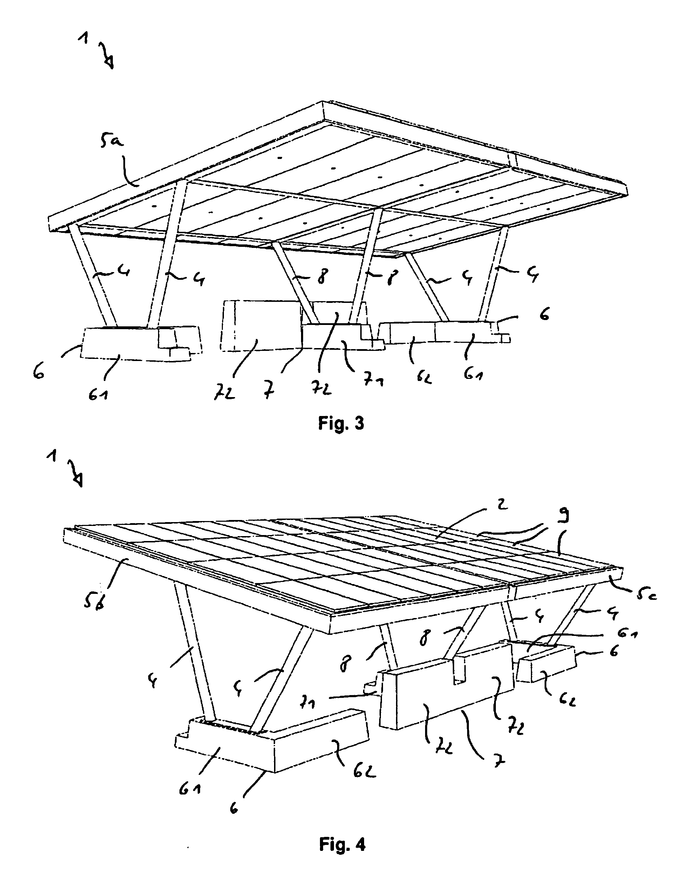

Die Fig. 3 und 4 zeigen in einer schematische Darstellung von schräg vorne und in einer Rückansicht von schräg oben eine Variante eines Carports mit 2 mal 2 nebeneinander angeordneten Stellplätzen, wobei zwischen den beiden Seiten-Sockelstrukturen 6 eine Mittel-Sockelstruktur 7 angeordnet ist, deren Schwerpunkt auf der gemeinsamen Schwerpunktslinie der Seiten-Sockelstrukturen 6 liegt.

Hierzu ist die die Mittel-Sockelstruktur 7 in einer T-Form ausgebildet, wobei ein Mittelträger 8 auf oder in einem dem mittleren Schenkel 71 der T-Form ruht, und wobei die zwei gegenüberliegenden freien Schenkel 72 der T-Form in Richtung und auf der Linie der beiden freien Schenkel 62 der Seiten-Sockelstrukturen 6 angeordnet sind.

In Fig. 5 ist auch gut zu erkennen, insbesondere in Detail b aus Fig. 5, dass die Seitenträger 4 vermittels Befestigungsbolzen 63 mit den Seiten-Sockelstruktur 6 auf deren Trag-Schenkel 61 verbunden sind.

Die in den Seiten-Sockelstrukturen 61 und dann in den freien Schenkeln 62 weitergeführten Leitungen 64 der durch die Solarpaneele gewonnenen elektrischen Energie sind ebenso dargestellt. Diese enden in einer schematisch dargestellten Anschlussmöglichkeit 65 für elektrische Fahrzeuge.

Die in den Fig. 6 und 7 näher gezeigten Sockelstrukturen nach der L-Form 6 und der T-Form 7 weisen zusammen eine Masseverteilung auf, die dementsprechend dezentral ausgebildet ist wie diese im Verhältnis außerhalb der Schwerpunktslinie der Dachfläche 2 angeordnet sind.

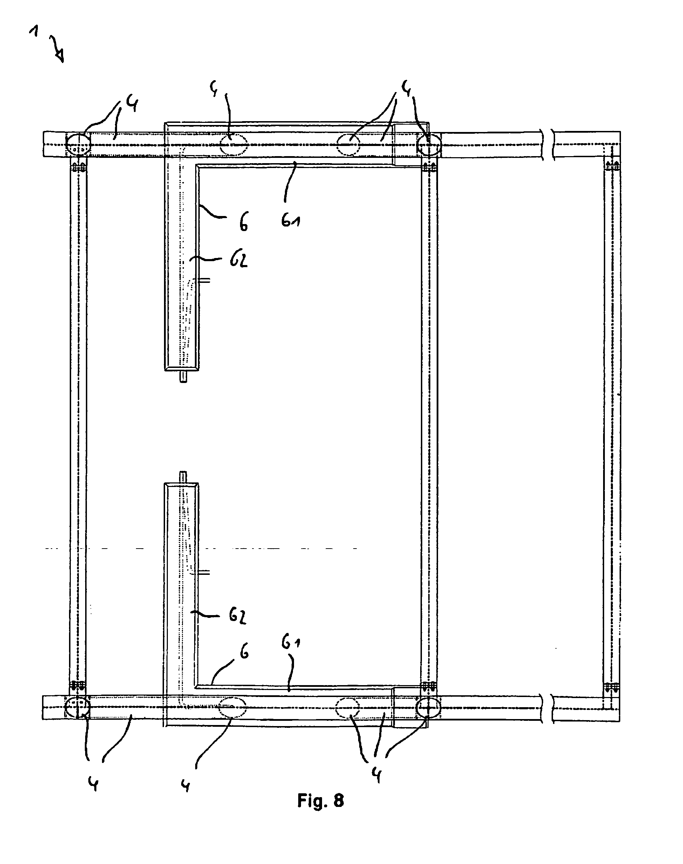

Fig. 8 schließlich zeigt nochmals eine schematische Draufsicht auf die Dachtragkonstruktion des Carports 1, also die Seiten-Sockelstrukturen 6 mit freien Schenkeln 62 und Trag-Schenkeln 61, auf denen die Seitenträger 4 stehen.

Der Abstand zwischen dem Schwerpunkt der Dachfläche zum Schwerpunkt der Sockelstrukturen beträgt ca. 1,35 m bis 1,60 m, vorzugsweise 1,47 nach Auswertung verschiedenen Testreihen.

Das Verhältnis des Abstands des Schwerpunkts der Dachfläche zur der Schwerpunktslinie der Sockelstrukturen am nächsten gelegenen Hinterkante der Dachfläche zum Abstand des Schwerpunkts der Sockelstrukturen zur Hinter-Seite der Dachfläche beträgt ca. 1,73. bis 1,93, vorzugsweise 1,83 nach verschiedenen Testreihen.

Das Verhältnis des Gewichts der gesamten Dachkonstruktion mit gegebenenfalls darauf montierten Solarpaneelen zum Gewicht der Sockelstrukturen beträgt 0,4 bis 0,7, vorzugsweise 0,66 in der Variante nach Fig. 1 und 0,44 nach der Variante nach Fig. 3, entsprechend dem Ergebnis verschiedenen Testreihen.

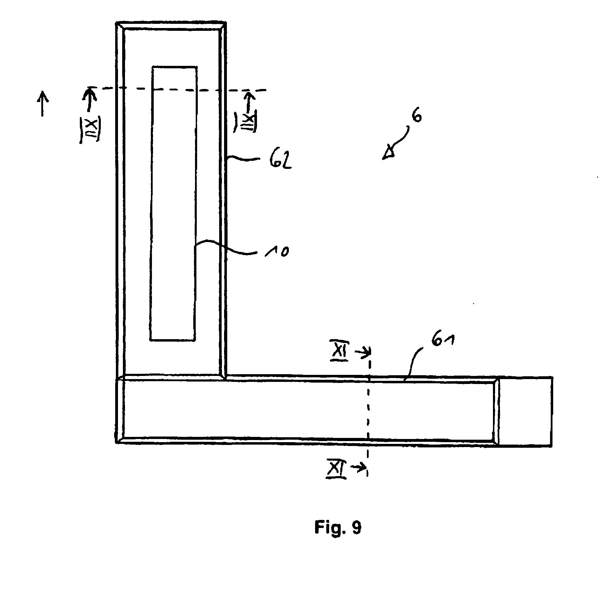

In Fig. 9 ist der in der Seiten-Sockelstruktur 6 ausgebildete elektrische Energiespeicher 10 näher gezeigt. Es handelt sich im Beispiel um eine Hochleistungsbatterie, die in der aus Beton gegossenen Sockelstruktur 6 im freien Schenkel 62 geschützt untergebracht ist.

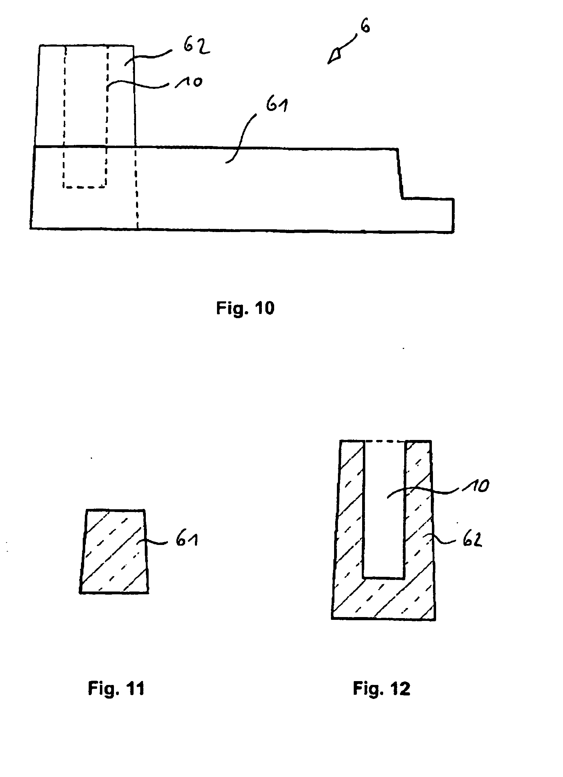

In Fig. 10 ist eine schematische Seitenansichts-Darstellung der Seiten-Sockelstruktur aus Fig. 9 gezeigt. Die Fig. 11 und 12 zeigen Schnittdarstellungen in Blickrichtung XI und XII aus Fig. 9.

Im Sinne der Erfindung kann der elektrische Energiespeicher auch oder nur in der T-förmigen Mittel-Sockelstruktur ausgebildet sein.

### Bezugszeichenliste

- 1: Carport
- 2: Dachfläche
- 31: Winkel gegen die Waagerechte
- 32: Waagerechte
- 4: Seitenträger
- 41a,41b: Winkel gegen die Senkrechte
- 42: Senkrechte
- 5a,5b: Stirnseiten
- 5c: Hinter-Seite
- 6: Seiten-Sockelstruktur
- 61: Trag-Schenkel
- 62: freie Schenkel
- 63: Befestigungsbolzen
- 64: Leitung
- 65: Anschlussmöglichkeit
- 7: Mittel-Sockelstruktur
- 71: mittleren Schenkel
- 72: freien Schenkel
- 8: Mittelträger
- 9: Solarpaneele
- 10: elektrischer Energiespeicher

## Patentansprüche

1. Carport (1) zur Aufstellung auf einer geschlossenen Fläche im Freien für wenigstens ein Kraftfahrzeug mit elektrischem Antrieb, welcher eine Dachfläche (2) aufweist welche unter einem Winkel (31) gegen die Waagerechte (32) angestellt ist, wobei die Dachfläche (2) durch Seitenträger (4) an zwei gegenüberliegenden Stirnseiten (5a, 5b) gestützt ist, welche jeweils auf einer Seiten-Sockelstruktur (6) fußen, welche auf der geschlossenen Fläche abgestellt werden können,
wobei auf der Dachfläche (2) Solarpaneele (9) angeordnet sind, durch die die aufgenommene Solarenergie in Strom umgewandet wird,
wobei in wenigstens einer der Seiten-Sockelstrukturen (6) ein elektrischer Energiespeicher (10) vorgesehen ist, der den erzeugten Strom zur Abgabe an ein zu ladendes Fahrzeug zwischenspeichern und kumulieren kann,
**dadurch gekennzeichnet,**
**dass** der erzeugte Strom durch eine Anschlussmöglichkeit (65) oder induktiv an ein unter der Dachfläche abgestelltes Fahrzeug abgegeben werden kann,
wobei die Seiten-Sockelstruktur (6) L-förmig ausgestaltet ist,
wobei die Seitenträger (4) auf oder in einem Trag-Schenkel (61) der L-Form ruhen, der parallel zu der Seite der Dachfläche (5a oder 5b) verläuft an denen die Seitenträger (4) die Dachfläche (2) unterstützen,
und **dass** der zweite freie Schenkel (62) der Seiten-Sockelstruktur (6) unterhalb der Dachfläche (2) angeordnet ist, wobei der elektrische Energiespeicher (10) im zweiten freien Schenkel (62) angeordnet ist.

2. Carport nach Anspruch 1,
**dadurch gekennzeichnet,**
**dass** der durch die Solarpaneele (9) erzeugte Strom über eine in den Seitenträgern (4) angeordnete Leitung (64) zu der Sockelstruktur (6) geführt ist.

3. Carport nach Anspruch 1 oder 2,
**dadurch gekennzeichnet,**
**dass** zwischen den beiden Seiten-Sockelstrukturen (6) eine Mittel-Sockelstruktur (7) angeordnet ist, deren Schwerpunkt auf der gemeinsamen Schwerpunktslinie der Seiten-Sockelstrukturen (6) liegt.

4. Carport nach Anspruch 3,
**dadurch gekennzeichnet,**
**dass** die Mittel-Sockelstruktur (7) eine T-Form hat, wobei ein Mittelträger (8) auf oder in einem dem mittleren Schenkel (71) der T-Form ruht.

5. Carport nach einem der Ansprüche 1 bis 4,
**dadurch gekennzeichnet,**
**dass** die Sockelstrukturen (6 und/oder 7) eine Masseverteilung aufweisen, die dementsprechend dezentral ausgebildet ist wie diese außerhalb der Schwerpunktslinie der Dachfläche (2) angeordnet sind.

## Claims

1. A carport (1) for erection on an enclosed area outdoors for at least one motor vehicle with an electric drive, which has a roof surface (2) which is leaned at an angle (31) with respect to the horizontal (32),
wherein the roof surface (2) is supported by side supports (4) at two opposite end faces (5a, 5b), which in each case rest on a side pedestal structure (6) which can be placed on the enclosed area,
wherein solar panels (9) are arranged on the roof surface (2), by means of which the solar energy received is converted into electricity,
wherein an electrical energy store (10) is provided in at least one of the side pedestal structures (6), which can temporarily store and accumulate the electricity generated for output to a vehicle to be charged,
**characterised in that**
the electricity generated can be output to a vehicle parked under the roof surface by means of a connection option (65) or inductively,
wherein the side pedestal structure (6) is configured in an L-shaped manner,
wherein the side supports (4) rest on or in a support leg (61) of the L shape which runs parallel to the side of the roof surface (5a or 5b) on which the side supports (4) support the roof surface (2),
and **in that** the second free leg (62) of the side pedestal structure (6) is arranged below the roof surface (2), wherein the electrical energy store (10) is arranged in the second free leg (62).

2. The carport according to Claim 1, **characterised in that** the electricity generated by the solar panels (9) is conveyed via a cable (64) arranged in the side supports (4) to the pedestal structure (6).

3. The carport according to Claim 1 or 2, **characterised in that** a central pedestal structure (7) is arranged between the two side pedestal structures (6), the centre of gravity of which lies on the common line of centre of gravity of the side pedestal structures (6).

4. The carport according to Claim 3, **characterised in that** the central pedestal structure (7) has a T shape, wherein a central beam (8) rests on or in the central leg (71) of the T shape.

5. The carport according to one of Claims 1 to 4, **characterised in that** the pedestal structures (6 and/or 7) have a mass distribution which is formed decentrally in a manner corresponding to how the same are arranged outside of the line of centre of gravity of the roof surface (2).

## Revendications

1. Abri de garage (1) pour l'installation sur une surface fermée à l'extérieur pour au moins un véhicule automobile avec un moteur électrique, lequel présente une surface de toit (2) laquelle est positionnée selon un angle (31) par rapport à l'horizontale (32), la surface de toit (2) étant en appui grâce à des supports latéraux (4) sur deux faces d'extrémité (5a, 5b) situées en vis-à-vis, lesquels supports reposent respectivement sur une structure de socle latérale (6), lesquelles structures peuvent être déposées sur la surface fermée,
des panneaux solaires (9) étant disposés sur la surface de toit (2), grâce auxquels l'énergie solaire absorbée est convertie en courant,
un accumulateur d'énergie électrique (10) étant prévu dans au moins l'une des structures de socle latérales (6), lequel panneau peut stocker temporairement le courant généré et le cumuler pour la délivrance à un véhicule à charger,
**caractérisé en ce que** le courant généré peut être délivré à un véhicule garé sous la surface de toit grâce à un moyen de raccordement (65) ou de manière inductive,
les structures de socle latérales (6) étant réalisées en forme de L,
les supports latéraux (4) reposant sur un bras de support (61) de la forme en L ou bien dans celui-ci, lequel bras s'étend parallèlement au côté de la surface de toit (5a, ou 5b) sur lesquels les supports latéraux (4) supportent la surface de toit (2),
et **en ce que** le deuxième bras libre (62) de la structure de socle latérale (6) est disposé en-dessous de la surface de toit (2), l'accumulateur d'énergie électrique (10) étant disposé dans le deuxième bras libre (62).

2. Abri de garage selon la revendication 1, **caractérisé en ce que** le courant généré par les panneaux solaires (9) est véhiculé jusqu'à la structure de socle (6) par l'intermédiaire d'une ligne (64) disposée dans les supports latéraux (4).

3. Abri de garage selon les revendications 1 ou 2, **caractérisé en ce qu'**une structure de socle centrale (7) est disposée entre les deux structures de socle latérales (6), dont le centre de gravité repose sur la ligne de centre de gravité commune des structures de socle latérales (6).

4. Abri de garage selon la revendication 3, **caractérisé en ce que** la structure de socle centrale (7) a une forme en T, un support central (8) reposant sur un bras central (71) de la forme en T ou dans celui-ci.

5. Abri de garage selon l'une des revendications 1 à 4, **caractérisé en ce que** les structures de socle (6 et/ou 7) présentent une répartition des masses, laquelle est réalisée d'une manière décentralisée correspondant à la manière dont celles-ci sont disposées en-dehors de la ligne de centre de gravité de la surface de toit (2).
